# EUROPÄISCHE PATENTANMELDUNG

(11) **EP 1 635 548 A1**
(43) Veröffentlichungstag der Anmeldung: **15.03.2006**
(21) Anmeldenummer: 05011278.8
(22) Anmeldetag: 25.05.2005
(51) Int. Cl.: H04M 1/725, H04M 11/02, G06F 1/16

(54) **Elektrische Einrichtung zur Anforderung einer Person, insb. eines Verkäufers oder Beraters in einem Supermarkt oder Kaufhaus**

(30) Priorität: 25.06.2004 DE 202004010011 U
(71) Anmelder: Systemhaus HTC Kommunikationssysteme GmbH, 73655 Plüderhausen (DE)
(72) Erfinder: Rölz, Roland, 73660 Urbach (DE); Pott, Martin, 73525 Schwäbisch Gmünd (DE); Rölz, Klaus, 73660 Urbach (DE)
(74) Vertreter: Schäfer, Wolfgang

(57) **Zusammenfassung**

Es wird eine elektrische Einrichtung (1) zur Anforderung einer Person beschrieben, insbesondere eines Verkäufers oder Beraters in einem Supermarkt oder Kaufhaus. Die elektrische Einrichtung (1) einer Auslösevorrichtung (2) zur Auslösung einer Anforderung versehen. Die elektrische Einrichtung (1) ist mit einer Telefoneinheit (3) versehen, die mit der Auslösevorrichtung (2) verbunden ist. Im Falle einer Anforderung ist über die Telefoneinheit (3) eine gegenseitige Sprachverbindung mit einem Verkäufer oder Berater herstellbar.

## Beschreibung

Die Erfindung betrifft eine elektrische Einrichtung zur Anforderung einer Person, insbesondere eines Verkäufers oder Beraters in einem Supermarkt oder Kaufhaus, mit einer Auslösevorrichtung zur Auslösung einer Anforderung.

Eine derartige elektrische Einrichtung ist aus dem deutschen Gebrauchsmuster DE 299 02 128 U1 bekannt. Dort ist ein Tableau oder dergleichen beschrieben, das einen Taster aufweist, mit dem ein Kunde eine Anforderung für einen Berater oder Verkäufer auslösen kann. Betätigt der Kunde den Taster, wird nicht nur ein optisches und ggf. ein akustisches Signal ausgelöst, sondern es wird ebenfalls von dem Tableau ein Signal an eine Sammelleitung übermittelt. Diese Sammelleitung ist mit einer Telefonanlage verbunden und ist derart ausgebildet, dass ein Berater oder Verkäufer nach Eingang des vorgenannten Signals auf seinem Telefonapparat angerufen wird. Der Verkäufer kann dann daraufhin zudem den Anruf auslösenden Tableau gehen und den dort wartenden Kunden beraten.

Aufgabe der Erfindung ist es, eine elektrische Einrichtung zur Anforderung einer Person zu schaffen, die für den Kunden noch einfacher zu bedienen ist und damit mehr Komfort aufweist.

Diese Aufgabe wird bei einer elektrischen Einrichtung der eingangs genannten Art dadurch gelöst, dass die elektrische Einrichtung mit einer Telefoneinheit versehen ist, die mit der Auslösevorrichtung verbunden ist, und dass im Falle einer Anforderung über die Telefoneinheit eine gegenseitige Sprechverbindung mit einem Verkäufer oder Berater herstellbar ist.

Mit Hilfe der Telefoneinheit kann somit eine gegenseitige Sprechverbindung zwischen dem Verkäufer und dem Kunden aufgebaut werden. Der Kunde kann dann bereits über diese Sprachverbindung seine Frage an den Verkäufer oder Berater richten. Die Frage kann damit ggf. schneller beantwortet werden, ohne dass der Verkäufer zu dem Tableau geht. Dies bedeutet eine wesentliche Verbesserung bei der Kundenberatung und Betreuung.

Weiterhin ist die Bedienung der erfindungsgemäßen Einrichtung äußerst einfach. Der Kunde muss nur die Auslösevorrichtung betätigen. Danach kann er in bekannter Weise sprachlich seine Frage bzw. sein Problem formulieren. Die Antwort erhält er - wie bei einem Telefon - ebenfalls sprachlich von dem Verkäufer oder Berater.

Bei einer vorteilhaften Weiterbildung der Erfindung ist im Falle einer Anforderung über die Telefoneinheit eine einseitige oder gegenseitige Bildverbindung mit einem Verkäufer oder Berater herstellbar. Auf diese Weise ist es möglich, die Frage des Kunden noch detaillierter mit Hilfe der Bildverbindung zu beantworten. Der Bedienungskomfort der erfindungsgemäßen Einrichtung wird damit weiter erhöht.

Bei einer weiteren vorteilhaften Ausgestaltung der Erfindung ist über die Telefoneinheit eine Verbindung zu einer zentralen Datenbank herstellbar. Mit Hilfe entsprechender Eingabegeräte kann dann der Kunde Anfragen an diese Datenbank richten. Beispielsweise kann der Kunde nachfragen, wo ein von ihm gesuchtes Produkt sich innerhalb des Supermarkts befindet. Als Antwort erhält der Kunde dann von der zentralen Datenbank beispielsweise eine bildliche Darstellung über den Produkt-Standort.

Bei einer besonders vorteilhaften Weiterbildung der Erfindung ist die Telefoneinheit über eine WLAN- oder LAN-Verbindung (WLAN =Wireless Local Area Network, LAN = Local Area Network) mit einer Telefonanlage verbindbar. Durch die Verwendung einer WLAN- oder LAN-Verbindung wird erreicht, dass auch hohe Datenvolumen schnell übertragen werden können. Damit ist es möglich, nicht nur die gegenseitige Sprachverbindung zwischen dem Kunden und dem Verkäufer über die WLAN- oder LAN-Verbindung zu realisieren, sondern auch eine ggf. vorhandene Bildverbindung sowie ggf. vorhandene Zugriffe auf eine zentrale Datenbank.

Bei einer anderen vorteilhaften Weiterbildung der Erfindung ist die Telefoneinheit über eine DECT-Verbindung (DECT = Digital European Cordless Telecommunication) mit einer Telefonanlage verbindbar. In diesem Fall kann die gegenseitige Sprachverbindung zwischen dem Verkäufer und dem Kunden über die DECT-Verbindung realisiert werden. Eine ggf. vorhandene Bildverbindung und/oder ein Zugriff auf eine zentrale Datenbank kann zusätzlich über eine kabelgebundene Verbindung, beispielsweise über ein Koaxialkabel realisiert sein.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Ansprüchen oder deren Rückbeziehung sowie unabhängig von ihrer Formulierung bzw. Darstellung in der Zeichnung bzw. in der Beschreibung.
- Figur 1: zeigt ein schematisches Blockschaltbild eines Ausführungsbeispiels einer erfindungsgemäßen elektrischen Einrichtung zur Anforderung einer Person, und
- Figur 2: zeigt ein schematisches Blockschaltbild eines Ausführungsbeispiels einer erfindungsgemäßen Telefonanlage mit der Einrichtung der Figur 1.

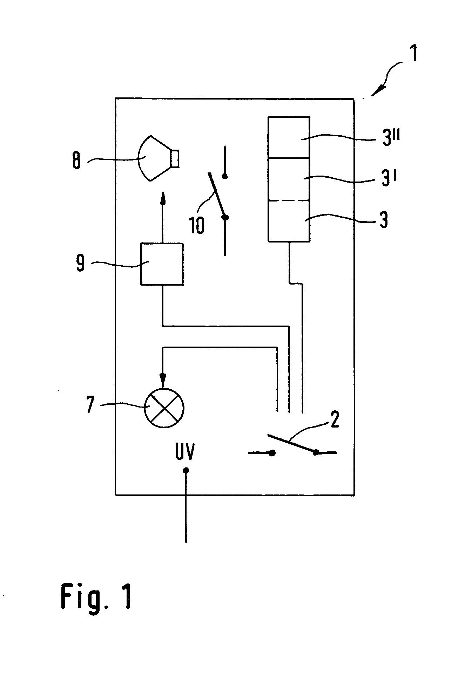

In der Figur 1 ist eine elektrische Einrichtung 1 dargestellt, die dazu vorgesehen ist, dass ein Kunde beispielsweise in einem Lebensmittel-Supermarkt oder in einem sonstigen Kaufhaus einen Verkäufer oder einen Berater anfordern kann. Die Einrichtung 1 kann als Tableau oder als sonstiger plakatartiger Gegenstand ausgebildet sein. Die Einrichtung 1 kann mit Texten beschriftet sein, die den Kunden darauf aufmerksam machen, dass er hier eine Beratung anfordern kann.

Die Einrichtung 1 ist mit einer Auslösevorrichtung 2 versehen, bei der es sich insbesondere um einen Tastschalter handeln kann. Die Auslösevorrichtung 2 ist dazu vorgesehen, dass ein Kunde, der eine Beratung durch einen Verkäufer wünscht, dieselbe betätigt.

Die Einrichtung 1 ist mit einer Telefoneinheit 3 versehen, die mit der Auslösevorrichtung 2 verbunden bzw. gekoppelt ist. Die Telefoneinheit 3 weist ein Mikrofon 3' und einen Lautsprecher auf und kann mit einem Bildschirm 3" und einer Videokamera versehen sein.

Weiterhin weist die Einrichtung eine Anzeigelampe 7 auf, die mit der Auslösevorrichtung 2 verbunden bzw. gekoppelt ist. Die Anzeigelampe 7 wird genau dann eingeschaltet, wenn die Auslösevorrichtung 2 von einem Kunden betätigt wird. Mit der eingeschalteten Anzeigelampe 7 wird kenntlich gemacht, dass an der zugehörigen Einrichtung 1 von einem Kunden eine Anforderung für eine Beratung ausgelöst worden ist.

Die Einrichtung 1 ist mit einem Lautsprecher 8 versehen, der über Sprachausgabemittel 9 mit der Auslösevorrichtung 2 verbunden bzw. gekoppelt ist. In den Sprachausgabemitteln 9 sind vorgegebene Texte abgespeichert, die beispielsweise wie folgt lauten können: "Sehr verehrter Kunde, bitte warten Sie einen Moment, der zuständige Berater wird Sie sofort bedienen." Wird die Auslösevorrichtung 2 von einem Kunden betätigt, so wird beispielsweise der vorgenannte Text mittels den Sprachausgabemitteln 9 über den Lautsprecher 8 an den Kunden ausgegeben.

Der Lautsprecher 8 und der Lautsprecher der Telefoneinheit 3 können miteinander kombiniert sein.

Schließlich ist die Einrichtung 1 mit einer Reset-Vorrichtung 10 versehen, bei der es sich beispielsweise um einen Tastschalter handeln kann. Durch die Reset-Vorrichtung 10 werden die Telefoneinheit 3, die Anzeigelampe 7 und die Sprachausgabemittel 9 in ihren ursprünglichen Zustand versetzt. Dies bedeutet, dass nach einer Betätigung der Auslösevorrichtung 2 durch einen Kunden und einer daraufhin erfolgenden Beratung des Kunden durch einen Verkäufer oder Berater mit Hilfe der Reset-Vorrichtung 10 die gesamte Einrichtung wieder in ihren ursprünglichen Zustand zurückversetzt werden kann. Danach kann von einem anderen Kunden erneut ein Verkäufer oder Berater über die Einrichtung 1 angefordert werden.

Die Einrichtung 1 ist an eine Versorgungsspannung UV angeschlossen. Die Telefoneinheit 3, das Mikrofon 3', der Bildschirm 3'', die Anzeigelampe 7, die Sprachausgabemittel 9 und der Lautsprecher 8 werden von dieser Versorgungsspannung UV mit der erforderlichen Energie versorgt.

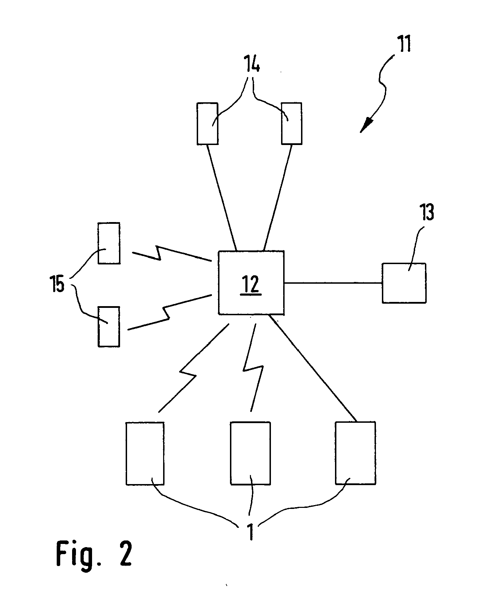

In der Figur 2 ist eine Gesamtanlage 11 dargestellt, bei der es sich beispielsweise um eine größere Haus-Telefonanlage handeln kann. Die Gesamtanlage 11 weist eine Telefonanlage 12 auf, an die beispielhaft eine Telefonzentrale 13 über Kabel angeschlossen ist. Ebenfalls beispielhaft sind weitere Telefonapparate 14 über Kabel sowie weitere kabellose Telefonapparate 15 an die Telefonanlage 12 angeschlossen bzw. mit dieser gekoppelt.

Die Telefonanlage 12 ist dazu vorgesehen, Telefongespräche zwischen den angeschlossenen Telefonapparaten und/oder in ein angeschlossenes öffentliches Telefonnetz zu vermitteln. Bei der Telefonzentrale 13 kann es sich beispielsweise um einen Telefonapparat handeln, der immer mit einer Person besetzt ist, und dem deshalb zentrale Vermittlungsaufgaben oder dergleichen zugeordnet sind.

Bei den Telefonapparaten 14, 15 kann es sich um übliche kabelgebundene bzw. kabellose Telefonapparate handeln.

Die Telefonanlage 12 ist beispielhaft mit drei elektrischen Einrichtungen 1 verbunden. Zwei dieser elektrischen Einrichtungen sind über eine kabellose Verbindung mit der Telefonanlage 12 gekoppelt. Die dritte der Einrichtungen 1 ist über eine kabelgebundene Verbindung an die Telefonanlage 12 angeschlossen.

Bei der Verbindung der Telefonanlage 12 mit den kabelgebundenen Telefonapparaten 14 handelt es sich um eine übliche Telefonverbindung. Entsprechendes gilt für die Verbindung zwischen der Telefonanlage 12 und der Telefonzentrale 13. Bei der Verbindung der Telefonanlage 12 mit den kabellosen Telefonapparaten 15 handelt es sich insbesondere um eine Verbindung nach der sog. DECT-Norm (DECT = Digital European Cordless Telecommunication). Bei der kabellosen Verbindung der Telefonanlage 12 mit der elektrischen Einrichtung 1 handelt es sich um eine sog. WLAN-Verbindung (WLAN = Wireless Local Area Network) und schließlich handelt es sich bei der kabelgebundenen Verbindung der Telefonanlage 12 mit der zugehörigen elektrischen Einrichtung 1 um eine sog. LAN-Verbindung (LAN = Local Area Network).

Beispielsweise ist es möglich, dass die Telefonanlage 12 als sog. DECT-Telefonanlage ausgebildet ist, in die ein sog. WLAN-Access-Point integriert ist. Eine derartige kombinierte DECT-WLAN-Telefonanlage ist dazu geeignet, über kabellose und/oder kabelgebundene Verbindungen mit DECT- und/oder WLAN-Telefonapparaten bzw. sonstigen Endgeräten zu kommunizieren.

Die Telefoneinheit 3 der elektrischen Einrichtung 1 ist derart ausgebildet, dass sie über eine kabellose oder kabelgebundene WLAN- oder LAN-Verbindung mit der Telefonanlage 12 kommunizieren kann. Beispielsweise ist es möglich, dass es sich bei der Telefoneinheit 3 um ein sog. IP-Telefon handelt (IP = Internet Protokol). Ein derartiges IP-Telefon weist grundsätzlich die Funktionen eines üblichen Telefongeräts auf, die Telefonverbindung wird jedoch über das Internet realisiert. Ein derartiges IP-Telefon ist deshalb auch nicht an das übliche Telefonnetz direkt angeschlossen, sondern an ein Computernetzwerk, beispielsweise an eine WLAN- oder LAN-Verbindung.

Wünscht ein Kunde eine Beratung durch einen Verkäufer oder eine sonstige Hilfestellung durch einen Berater oder dergleichen, so betätigt der Kunde die Auslösevorrichtung 2 der elektrischen Einrichtung 1. Dies hat zur Folge, dass die Anzeigelampe 7 eingeschaltet wird, um damit auf den Kundenwunsch optisch hinzuweisen.

Weiterhin wird der Kunde über den Lautsprecher 8 darauf hingewiesen, dass ein Berater oder Verkäufer sich umgehend melden wird.

Weiterhin hat die Betätigung der Auslösevorrichtung 2 zur Folge, dass von der Telefoneinheit 3 eine Verbindung zu der Telefonanlage 12 hergestellt wird. Dies erfolgt über die kabellose WLAN-Verbindung oder die kabelgebundene LAN-Verbindung. Von der Telefonanlage 12 wird dann automatisch ein Verkäufer oder Berater über einen der Telefonapparate 14 bzw. 15 angewählt. Alternativ oder ergänzend ist es möglich, dass von der Telefonanlage 12 die Telefonzentrale 13 angewählt wird. Auf diese Weise entsteht letztlich eine Telefonverbindung zwischen der Telefoneinheit 3 der elektrischen Einheit 1 und einem der Telefonapparate 14 bzw. 15 oder der Telefonzentrale 13.

Über diese nunmehr vorhandene Verbindung kann der Kunde daraufhin mit dem Verkäufer oder Berater sprechen. Zu diesem Zweck wird in der elektrischen Einheit 1 das Mikrofon 3' und der Lautsprecher von dem Kunden verwendet, während der Verkäufer oder Berater zu diesem Zwecke seinen Telefonapparat 14 bzw. 15 bzw. die Telefonzentrale 13 benutzt. Es besteht somit eine Sprachverbindung zwischen dem Kunden und dem Verkäufer bzw. Berater.

Zusätzlich ist es möglich, dass über die WLAN- oder LAN-Verbindung auch eine Bildverbindung realisiert ist. In diesem Fall weist die elektrische Einrichtung den Bildschirm 3'' und die Videokamera auf. Entsprechende Bauteile sind dann auch in den Telefonapparaten 14 bzw. 15 oder in der Telefonzentrale 13 vorhanden. Mit Hilfe dieser Videokameras und Bildschirme ist es möglich, dass der Kunde und der Berater sich auch gegenseitig auf den Bildschirmen sehen können.

Es versteht sich, dass die vorstehend beschriebene Bildverbindung auch nur einseitig vorhanden sein kann, dass also insbesondere nur der Kunde den Berater auf dem Bildschirm 3'' der elektrischen Einrichtung 3 einsehen kann, dass jedoch die elektrische Einrichtung 1 keine Videokamera aufweist und damit der Berater den Kunden nicht sehen kann.

Weiterhin besteht die Möglichkeit, dass die elektrische Einrichtung 1 mit einem Eingabegerät versehen ist, das von dem Kunden bedient werden kann. So kann beispielsweise eine Tastatur vorgesehen sein, auf der der Kunde ein von ihm gesuchtes Produkt eingeben kann. Die elektrische Einrichtung 1 kann dann diese Anfrage über die WLAN- oder LAN-Verbindung an eine zentrale Datenbank weitergeben. Von dort kann der elektrischen Einrichtung 1 als Antwort der genaue Standort des gesuchten Produkts übermittelt werden. Dieser Standort kann von der elektrischen Einrichtung 1 auf den Bildschirm 3" beispielsweise in Form von bildlichen Darstellungen ausgegeben und damit dem Kunden mitgeteilt werden.

Ebenfalls ist es möglich, dass die elektrische Einrichtung 1 einen Scanner aufweist. Ein Kunde kann dann ein bestimmtes Produkt bzw. dessen Kennzeichnungsfeld über den Scanner hinwegziehen. Die von dem Scanner eingescannte Kennzeichnung kann über die WLAN- oder LAN-Verbindung an eine zentrale Datenbank weiter vermittelt werden. Als Antwort kann beispielsweise der Preis oder sonstige detaillierte Informationen zu dem Produkt von der zentralen Datenbank an die elektrische Einrichtung 1 zurückgesendet werden. Diese Informationen können von der elektrischen Einrichtung 1 auf den Bildschrim 3" an den Kunden ausgegeben werden.

Als Alternative ist es möglich, dass anstelle der WLAN- oder LAN-Verbindung zwischen der Telefonanlage 12 und der elektrischen Einrichtung 1 eine DECT-Verbindung vorhanden ist. In diesem Fall ist es nicht möglich, über die DECT-Verbindung eine Bildverbindung zur realisieren oder eine Kommunikation mit einer zentralen Datenbanken zu realisieren. In diesem Fall kann somit der Bildschirm 3" und die Videokamera in der elektrischen Einrichtung 1 entfallen.

Mit Hilfe der DECT-Verbindung zwischen der Telefonanlage 12 und der elektrischen Einrichtung 1 ist es jedoch möglich, eine gegenseitige Sprachverbindung aufzubauen. Die Telefoneinheit 3 mit dem Mikrofon 3' und dem Lautsprecher ist in diesem Fall mit einem kabellosen Telefonapparat vergleichbar, der über die genannte DECT-Verbindung mit der Telefonanlage 12 gekoppelt ist.

Ist eine derartige DECT-Verbindung zwischen der Telefonanlage 12 und der elektrischen Einrichtung 1 vorhanden, so kann die Bildverbindung und/oder der Zugriff auf eine zentrale Datenbank mit Hilfe einer zusätzlichen Kabelverbindung, beispielsweise mit Hilfe eines Koaxialkabels hergestellt werden.

Als weitere Alternative ist es möglich, dass anstelle der WLAN- oder LAN-Verbindung zwischen der Telefonanlage 12 und der bzw. den elektrischen Einrichtungen 1 eine kabelgebundene Verbindung vorhanden ist. Handelt es sich dabei um eine übliche Telfonverbindung, so ist damit nur eine gegenseitige Sprachverbindung realisierbar. Die Bildverbindung und/oder der Zugriff auf eine zentrale Datenbank muss dann separat beispielsweise durch eine zusätzliche Kabelverbindung realisiert werden. Ebenfalls ist es in diesem Fall möglich, dass die elektrische Einrichtung keinen Bildschirm 3" aufweist und damit keine Bildverbindung und kein Zugriff auf eine zentrale Datenbank möglich ist.

## Patentansprüche

1. Elektrische Einrichtung (1) zur Anforderung einer Person, insbesondere eines Verkäufers oder Beraters in einem Supermarkt oder Kaufhaus, mit einer Auslösevorrichtung (2) zur Auslösung einer Anforderung, **dadurch gekennzeichnet, dass** die elektrische Einrichtung (1) mit einer Telefoneinheit (3) versehen ist, die mit der Auslösevorrichtung (2) verbunden ist, und dass im Falle einer Anforderung über die Telefoneinheit (3) eine gegenseitige Sprachverbindung mit einem Verkäufer oder Berater herstellbar ist.

2. Einrichtung (1) nach Anspruch 1, **dadurch gekennzeichnet, dass** im Falle einer Anforderung über die Telefoneinheit (3) eine einseitige oder gegenseitige Bildverbindung mit einem Verkäufer oder Berater herstellbar ist.

3. Einrichtung (1) nach einem der vorstehenden Anspruch, **dadurch gekennzeichnet, dass** über die Telefoneinheit (3) eine Verbindung zu einer zentralen Datenbank herstellbar ist.

4. Einrichtung (1) nach einem der vorstehenden Ansprüche, **dadurch gekennzeichnet, dass** die Telefoneinheit (3) mit einem Mikrofon (3') versehen ist.

5. Einrichtung (1) nach einem der vorstehenden Ansprüche, **dadurch gekennzeichnet, dass** die Telefoneinheit (3) mit einem Bildschirm (3'') versehen ist.

6. Einrichtung (1) nach einem der vorstehenden Ansprüche, **dadurch gekennzeichnet, dass** ein Eingabegerät und/oder ein Scanner vorgesehen ist.

7. Einrichtung (1) nach einem der vorstehenden Ansprüche, **dadurch gekennzeichnet, dass** die Telefoneinheit (3) über eine WLAN- oder LAN-Verbindung mit einer Telefonanlage (12) verbindbar ist.

8. Einrichtung (1) nach einem der vorstehenden Ansprüche, **dadurch gekennzeichnet, dass** die Telefoneinheit (3) über eine DECT-Verbindung mit einer Telefonanlage (12) verbindbar ist.

9. Einrichtung (1) nach einem der vorstehenden Ansprüche, **dadurch gekennzeichnet, dass** die Telefoneinheit (3) kabelgebunden mit einer Telefonanlage (12) verbindbar ist.

10. Telefonanlage (12) mit einer Mehrzahl von Telefonapparaten (13, 14, 15), **dadurch gekennzeichnet, dass** die Telefonanlage (12) mit mindestens einer elektrischen Einrichtung (1) nach einem der vorstehenden Ansprüche verbunden ist.

11. Telefonanlage (12) nach Anspruch 11, **dadurch gekennzeichnet, dass** es sich um eine Telefonanlage handelt, die einen WLAN- oder LAN-Access-Point zur Verfügung stellt.

12. Telefonanlage (12) nach einem der Ansprüche 10 oder 11, **dadurch gekennzeichnet, dass** es sich um eine DECT-Telefonanlage handelt.

13. Telefonanlage (12) nach einem der Ansprüche 10 bis 12, **dadurch gekennzeichnet, dass** die Telefonanlage (12) dazu geeignet ist, automatisch eine Verbindung von der elektrischen Einrichtung (1) zu einem der Telefonapparate (13, 14, 15) aufzubauen.
